# FASCICULE DE BREVET EUROPEEN

(11) **EP 1 530 273 B1**
(45) Date de publication et mention de la délivrance du brevet: **27.05.2009**
(21) Numéro de dépôt: 04292441.5
(22) Date de dépôt: 14.10.2004
(51) Int. Cl.: H02G 3/06, H02G 3/04

(54) **Accessoire d'angle pour goulottes comprenant deux volets assemblés en biais**
Winkelzubehörelement für Führungskanäle mit zwei in die Quere zusammengefügten Flügeln
Angle accessory for duct composed of two aslant assembled flaps

(30) Priorité: 05.11.2003 FR 0312988
(43) Date de publication de la demande: 11.05.2005
(73) Titulaire: LEGRAND FRANCE, 87000 Limoges (FR); LEGRAND SNC, 87000 Limoges (FR)
(72) Inventeur: Jarry, Patrice, 72140 Mont Saint Jean (FR); Mathieu, Tristan, 21000 Dijon (FR)
(74) Mandataire: Orsini, Fabienne

(56) Documents cités:
- EP-A- 0 823 762
- EP-A- 1 207 604

## Description

La présente invention concerne de manière générale les goulottes du type de celles mises en oeuvre, par exemple, pour le support, le logement et la protection des conducteurs, canalisations ou autres équipements nécessaires à la desserte de ces appareillages.

Plus particulièrement, elle concerne un accessoire d'angle destiné à établir une continuité entre deux tronçons de goulotte cheminant sur deux parois faisant un dièdre entre elles, comprenant deux volets distincts présentant des moyens d'assemblage qui coopèrent pour autoriser le pivotement desdits volets autour d'un axe de pivotement, ces moyens d'assemblage comprenant, d'une part, à une extrémité de retours du premier volet, deux éléments d'engagement mâles s'étendant selon l'axe de pivotement, et, d'autre part, à une extrémité de retours du second volet, deux éléments d'engagement femelles destinés recevoir lesdits éléments d'engagement mâles

On connaît déjà notamment du document IT 01281834 un accessoire d'angle de ce type dont un volet comporte à une extrémité de ses retours des oreilles en vis-à-vis qui portent des tétons destinés à être insérés dans des ouvertures prévues dans les retours de l'autre volet.

L'assemblage des volets entre eux est réalisé en pinçant légèrement les retours du volet portant lesdites ouvertures pour déformer élastiquement lesdits retours et engager lesdites ouvertures sur lesdits tétons.

Ainsi, lesdits volets peuvent prendre différentes positions angulaires relatives comprises entre une première position extrême dans laquelle le volet portant les tétons découvre au maximum l'autre volet pour former un angle inférieur ou égal à 90° et une deuxième position extrême dans laquelle le volet portant les tétons est complètement rabattu sur l'autre volet pour former un angle supérieur à 90°.

En outre, selon ce document, chacune desdites oreilles portant les tétons du volet correspondant présente un bord circulaire pourvu d'un biseau qui, lorsque ledit volet est dans la deuxième position extrême complètement rabattu sur l'autre volet, est destiné à coopérer avec un coin prévu en creux, au voisinage de l'ouverture, sur la surface externe du retour du volet correspondant. Cette coopération des biseaux avec les coins évite que, dans cette deuxième position extrême, un choc intervenant sur lesdits volets provoque la sortie des tétons desdites ouvertures et donc le désassemblage desdits volets.

L'inconvénient majeur de l'accessoire d'angle précité est que, mise à part cet agencement de biseaux et de coins, il ne comporte aucun moyen pour éviter que, dans les positions angulaires relatives desdits volets autres que ladite deuxième position extrême précitée, un choc intervenant sur lesdits volets provoque la sortie des tétons desdites ouvertures et donc le désassemblage desdits volets.

Afin de remédier à cet inconvénient de l'état de la technique, la présente invention propose un accessoire tel que défini en introduction qui comporte un moyen pour éviter qu'un choc intervenant sur lesdits volets provoque le désassemblage desdits volets quelle que soit leur position relative d'utilisation.

Plus particulièrement, l'accessoire d'angle selon l'invention est caractérisé en ce que le premier volet porte, au voisinage desdits éléments d'engagement mâles, en saillie d'un de ses bords d'extrémité, au moins une aile qui forme un obstacle définissant avec au moins un retour dudit premier volet au moins un passage d'accès à au moins un élément d'engagement mâle, ledit passage présentant une hauteur réduite contraignant à assembler lesdits volets entre eux en approchant le second volet incliné par rapport à l'axe de pivotement du premier volet, puis en pivotant ledit second volet pour le redresser selon l'axe de pivotement afin d'engager successivement un desdits éléments d'engagement femelles sur l'élément d'engagement mâle correspondant puis l'autre desdits éléments d'engagement femelles sur l'autre élément d'engagement mâle correspondant.

D'autres caractéristiques non limitatives et avantageuses de l'accessoire selon l'invention sont les suivantes :
- ladite aile est unique et s'étend sur la majorité de la hauteur du volet correspondant,
- chaque aile présente un profil courbe,
- chaque aile est inclinée par rapport à l'axe de pivotement défini par lesdits moyens d'engagement mâles,
- un desdits éléments d'engagement mâles comporte une pente destinée à coopérer avec un chanfrein prévu sur l'élément d'engagement femelle correspondant pour aider à assembler lesdits éléments d'engagement mâle et femelle,
- lesdits éléments d'engagement mâles sont des tétons qui font saillie de la face interne dudit premier volet,
- lesdits éléments d'engagement femelles sont des ouvertures prévues dans des oreilles en vis-à-vis qui saillent des extrémités des retours correspondants dudit second volet,
- chaque aile forme une seule pièce avec ledit premier volet réalisé par moulage d'une matière plastique,
- lesdits éléments d'engagement mâles viennent de formation avec ledit premier volet réalisé par moulage d'une matière plastique, et
- lesdits éléments d'engagement femelles viennent de formation avec ledit second volet réalisé par moulage d'une matière plastique.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1A est une vue schématique en perspective du côté intérieur d'un premier volet de l'accessoire d'angle selon l'invention,
- la figure 1B est une vue schématique en perspective du côté extérieur du premier volet de la figure 1A,
- la figure 1C est une vue en coupe selon le plan A-A du premier volet de la figure 1B,
- la figure 2A est une vue schématique en perspective du côté intérieur d'un second volet de l'accessoire d'angle selon l'invention,
- la figure 2B est une vue schématique en perspective du côté extérieur du second volet de la figure 2A,
- la figure 2C est une vue en coupe selon le plan B-B du second volet de la figure 2A,
- la figure 3A est une vue schématique de face du côté intérieur de la phase d'assemblage des premier et second volets des figures 1A et 2A,
- la figure 3B est une vue schématique de face du côté intérieur des premier et second volets des figures 1A et 2A assemblés, et
- la figure 4 est une vue schématique en perspective du côté extérieur de l'accessoire d'angle selon l'invention disposé à la jonction de deux goulottes d'orientations différentes.

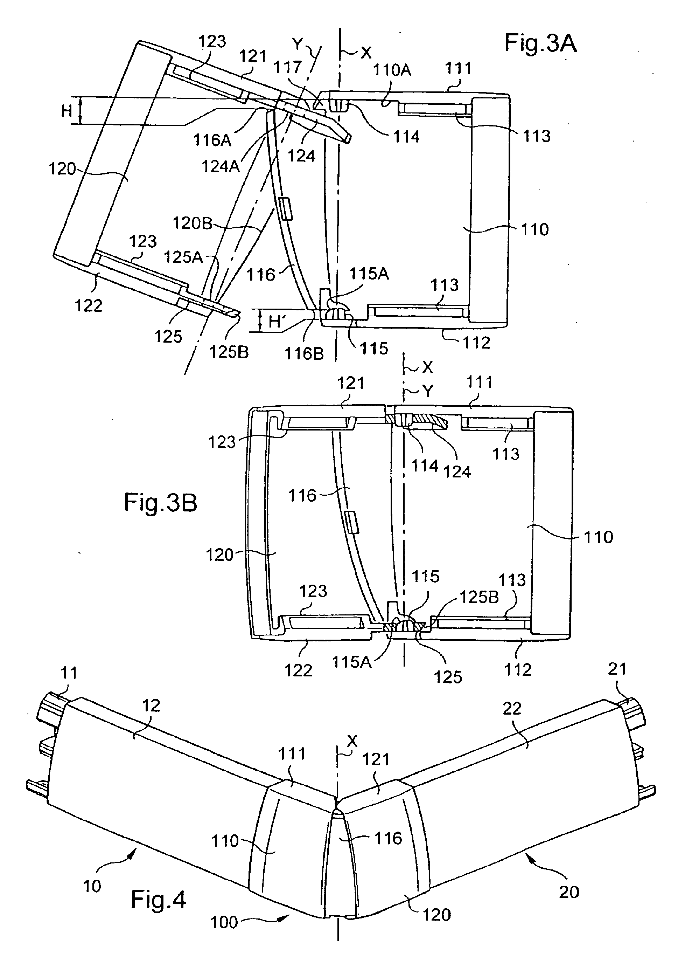

Sur la figure 4 on a représenté un accessoire d'angle 100 selon l'invention à disposer à la jonction de deux goulottes 10, 20 d'orientations différentes.

Ici, cet accessoire d'angle 100 est particulièrement adapté pour joindre deux goulottes 10, 20 faisant, en pratique, un angle droit entre elles.

En considérant deux parois formant un dièdre saillant entre elles, les socles 11, 21 des deux goulottes 10, 20 sont chacun respectivement disposés à plat sur ces deux parois, en courant par exemple en plinthe à la base de celle-ci.

Les extrémités des socles 11,21 des goulottes 10,20 sont coupées de manière pratiquement jointive au niveau de leur fond et sont positionnées bord à bord, de manière pratiquement jointive, pour former sensiblement l'angle saillant que forment les parois-support entre elles.

Ici, les socles 11, 21 des goulottes 10, 20 ont une section transversale globalement en forme de U avec deux ailes latérales qui bordent un fond. En outre, le socle 11, 21 de chaque goulotte 10, 20 porte une cloison de séparation qui s'élève perpendiculairement à son fond pour séparer l'espace intérieur dudit socle en deux compartiments isolés l'un de l'autre.

Chaque socle 11, 21 de chaque goulotte 10, 20 est fermé par un couvercle 12, 22 qui est adapté à être rapporté par encliquetage sur les ailes latérales dudit socle 11, 21. Ici les couvercles 12, 22 sont dits recouvrant car ils viennent recouvrir la face externe desdites ailes latérales.

L'accessoire d'angle 100 est un cache qui se substitue localement au couvercle 12, 22 de chacune des goulottes, en recouvrant préférentiellement l'extrémité coupée correspondante de ce couvercle (voir figure 4).

Il comporte deux volets 110, 120 distincts.

Chaque volet 110, 120 présente un profil similaire à celui des couvercles 12, 22 des goulottes 10, 20, avec une joue bordée sur deux côtés opposés de deux retours 111,112, 121, 122 s'étendant en vis-à-vis sensiblement à l'équerre de ladite joue.

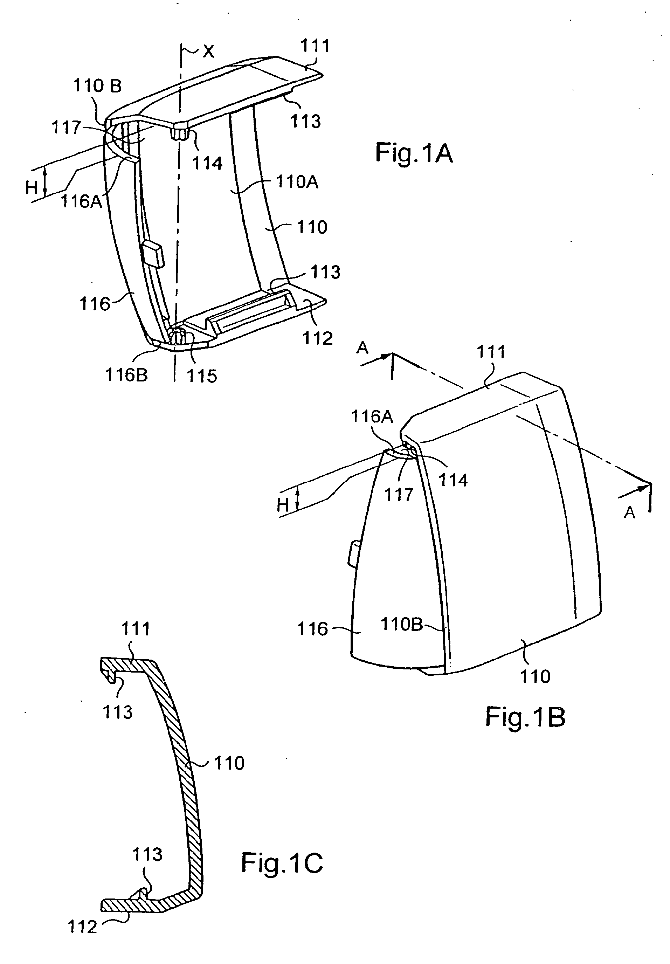

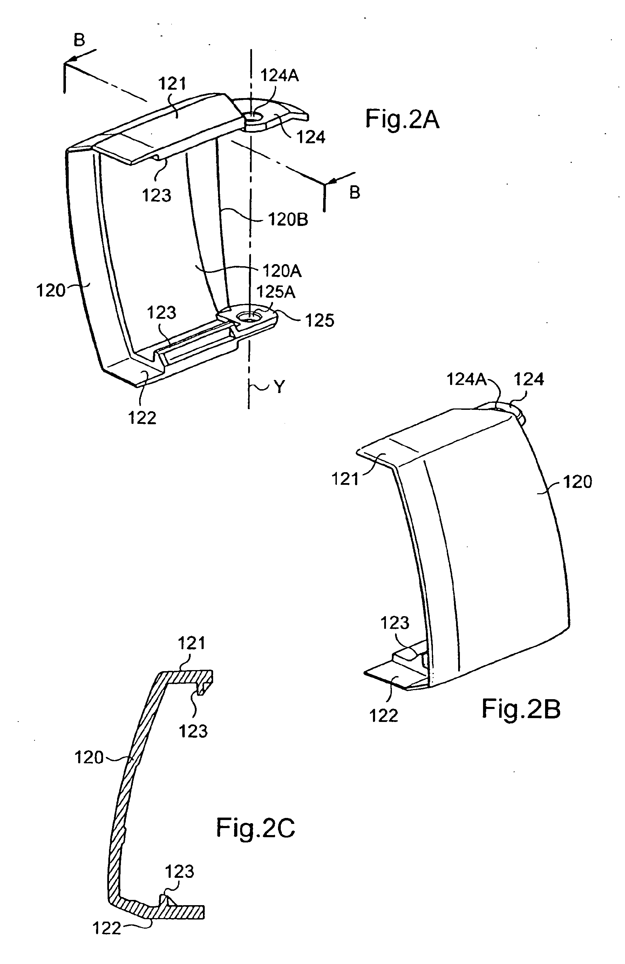

Comme le montrent plus particulièrement les figures 1A, 1C, 2A, 2C, les retours 111, 112, 121, 122 de chaque volet 110, 120 comportent, du côté de la face intérieure 110A, 120A de la joue, des moyens d'assujettissement 113, 123 qui sont propres au maintien du volet 110, 120 par rapport aux goulottes 10, 20.

Ici, ces moyens d'assujettissement sont des dents d'encliquetage 113, 123 aptes à s'encliqueter sur des bourrelets d'encliquetage (non visibles sur la figure 4) situés sur la face externe desdites ailes latérales des socles 11, 21 desdites goulottes 10, 20.

Ces dents d'encliquetage 113, 123 ne s'étendent pas sur toute la longueur desdits retours 111, 112, 121, 122 de sorte que chaque volet 110, 120 comporte une partie d'extrémité (constituée d'une partie de la joue et des deux retours du volet), dite partie d'extrémité extérieure (située à droite sur la figure 1A pour le premier volet 110 et à gauche sur la figure 2A pour le second volet 120), adaptée à recouvrir une partie d'extrémité coupée du couvercle 12, 22 de goulotte correspondant.

Avantageusement, chaque volet 110, 120 comporte sur sa face intérieure 110A, 120A, à la jonction entre les dents d'encliquetages 113, 123 et ladite partie d'extrémité extérieure, un rebord ou butée qui se prolonge sur la joue du volet 110, 120 et qui sert de repère de positionnement de chaque volet 110, 120 sur chaque couvercle 12, 22 de goulotte en venant en appui contre le bord coupé du couvercle correspondant 12, 22.

Par ailleurs, les volets 110, 120 de l'accessoire d'angle 100 comportent des moyens d'assemblage qui coopèrent pour autoriser le pivotement desdits volets 110, 120 autour d'un axe de pivotement X.

Ces moyens d'assemblage comprennent, d'une part, à une extrémité des retours 111, 112 du premier volet 110, deux éléments d'engagement mâles 114, 115 s'étendant selon l'axe de pivotement X (voir figures 1A, 1B), et, d'autre part, à une extrémité des retours 121, 122 du second volet 120, deux éléments d'engagement femelles 124, 124A, 125, 125A destinés recevoir lesdits éléments d'engagement mâles 114, 115 (voir figure 2A, 2B).

Comme le montre la figure 1A, les deux éléments d'engagement mâles 114, 115 sont situés à l'extrémité dite intérieure (située à gauche sur la figure 1A) des retours 111, 112 du premier volet 110, c'est-à-dire à l'opposée de ladite extrémité extérieure adaptée à recouvrir une partie d'extrémité d'un couvercle 12 de goulotte.

Comme le montre la figure 2A, les deux éléments d'engagement femelles 124, 124A, 125, 125A sont situés à l'extrémité dite intérieure (située à droite sur la figure 2A) des retours 121, 122 du second volet 120, c'est-à-dire à l'opposée de ladite extrémité extérieure adaptée à recouvrir une partie d'extrémité d'un couvercle 22 de goulotte.

Ici, lesdits éléments d'engagement mâles sont des tétons 114, 115 qui font saillie de la face interne 110A dudit premier volet 110. Lesdits tétons 114, 115 se font face et définissent l'axe de rotation X (voir figure 1 A).

Lesdits éléments d'engagement femelles sont des ouvertures 124A, 125A prévues dans des oreilles 124, 125 en vis-à-vis qui saillent du bord d'extrémité 120B correspondant dudit second volet 120. Lesdites ouvertures 124A, 125A sont ici circulaires, elles sont placées en regard l'une de l'autre et présentent donc le même axe Y (voir figure 2A).

Avantageusement, selon l'invention, comme le montrent les figures 1A et 1B, le premier volet 110 porte, au voisinage desdits éléments d'engagement mâles 114, 115, en saillie d'un de ses bords d'extrémité 110B, au moins une aile 116 qui forme un obstacle définissant avec au moins un retour 111, 112 dudit premier volet 110 au moins un passage 117 d'accès à au moins un élément d'engagement mâle 114, ledit passage 117 présentant une hauteur H réduite contraignant à assembler lesdits volets 110, 120 entre eux en approchant le second volet 120 incliné par rapport à l'axe de pivotement X du premier volet 110 (voir figure 3A), puis en pivotant ledit second volet 120 pour le redresser selon l'axe de pivotement X (voir figure 3B) afin d'engager successivement un desdits éléments d'engagement femelles 124, 124A sur l'élément d'engagement mâle correspondant 114 puis l'autre desdits éléments d'engagement femelles 125, 125A sur l'autre élément d'engagement mâle correspondant 115.

Ici ladite aile 116 est unique et s'étend sur la majorité de la hauteur du premier volet 110.

Cette aile 116 unique définie alors deux passages un pour chaque oreille 124, 125 du second volet 120.

En particulier, comme la montre la figure 3A, un premier passage 117 de hauteur H réduite est défini entre le bord supérieur 116A de ladite aile 116 et le retour 111 du premier volet 110 et un second passage de hauteur H' réduite est défini entre le bord inférieur 116B de ladite aile 116 et le retour 112 du premier volet 110.

Le premier passage 117, dit passage supérieur, permet à l'ouverture 124A prévue dans l'oreille 124 du second volet 120 d'accéder au téton 114 du premier volet 110, et le second passage (non référencé sur la figure 3A), dit passage inférieur, permet à l'ouverture 125A prévue dans l'oreille 125 du second volet 120 d'accéder au téton 115 du premier volet 110.

La hauteur de ces passages 117 est comprise environ entre 1 et 6 mm par exemple, préférentiellement entre 1 et 3 mm.

Cette aile 116 présente préférentiellement un profil courbe et est légèrement inclinée par rapport à l'axe de pivotement X défini par lesdits moyens d'engagement mâles 114, 115. Lorsque les deux volets 110, 120 sont assemblés, l'aile 116 établit la jonction entre ceux-ci en fermant l'angle formé par les socles de goulotte 11, 21.

Avantageusement, ladite aile 116 forme une seule pièce avec ledit premier volet 110 réalisé par moulage d'une matière plastique.

En outre, préférentiellement, un des éléments d'engagement mâles, le téton 115, comporte une pente 115A destinée à coopérer avec un chanfrein 125B prévu sur l'élément d'engagement femelle correspondant, c'est-à-dire sur le bord de l'oreille 125, pour aider à assembler lesdits éléments d'engagement mâle et femelle (voir figure 3A et 3B).

Ici également, lesdits éléments d'engagement mâles 114, 115 et femelles 124, 124A, 125, 125A viennent de formation respectivement avec ledit premier volet 110 et ledit second volet 120, réalisés par moulage d'une matière plastique.

D'une manière plus générale, chaque volet 110, 120 de l'accessoire d'angle 100 selon l'invention est une pièce monobloc réalisée préférentiellement par moulage d'une matière plastique.

Ainsi comme le montrent les figures 3A et 3B, pour assembler les deux volets 110, 120, il est nécessaire d'approcher le second volet 120 du premier volet 110 avec son axe Y incliné par rapport à l'axe de pivotement X afin d'insérer l'oreille 124 supérieure dudit second volet 120 dans ledit passage 117 défini entre l'aile 116 et le retour 111 du premier volet 110 pour que ladite ouverture 124A vienne se placer en regard du téton 114 correspondant.

Puis, le second volet 120 est redressé selon l'axe de pivotement X pour, tout d'abord, engager ladite ouverture 124A sur ledit téton 114, puis, insérer l'oreille 125 inférieure dans le passage correspondant défini entre l'aile 116 et le retour 112 du premier volet 110 pour que ladite ouverture 125A s'engage sur le téton 115 correspondant. Cet engagement de l'ouverture 125A sur le téton 115 est facilité par le glissement du chanfrein 125B de l'oreille 125 sur la pente 115A dudit téton 115 qui aide ladite oreille 125 à chevaucher ledit téton 115.

À l'inverse, il est également possible de procéder en premier lieu à l'engagement de l'ouverture 125A sur le téton 115, puis, en second lieu, à l'engagement de l'ouverture 124A sur le téton 114, en procédant de manière symétrique.

Un choc intervenant sur ledit accessoire d'angle 100 ne peut provoquer alors le désassemblage des deux volets 110, 120, quelle que soit la position angulaire relative desdits volets 110, 120, car on comprend aisément que ledit second volet 120 ne peut pas de lui-même, même lors d'un choc relativement violent, faire le mouvement de pivotement arrière pour sortir de sa coopération à pivotement avec ledit premier volet 110.

En particulier l'ouverture 124A de l'oreille 124 supérieure ne pourrait en aucun cas sortir de sa coopération avec le téton 114 car ladite oreille 124 viendrait naturellement buter contre l'aile 116.

## Revendications

1. Accessoire d'angle (100) destiné à établir une continuité entre deux tronçons de goulotte (10,20) cheminant sur deux parois faisant un dièdre entre elles, comprenant deux volets (110,120) distincts présentant des moyens d'assemblage qui coopèrent pour autoriser le pivotement desdits volets autour d'un axe de pivotement (X), ces moyens d'assemblage comprenant, d'une part, à une extrémité de retours (111,112) du premier volet (110), deux éléments d'engagement mâles (114,115) s'étendant selon l'axe de pivotement (X), et, d'autre part, à une extrémité de retours (121,122) du second volet (120), deux éléments d'engagement femelles (124,124A,125,125A) destinés recevoir lesdits éléments d'engagement mâles (114,115), **caractérisé en ce que** le premier volet (110) porte, au voisinage desdits éléments d'engagement mâles (114,115), en saillie d'un de ses bords d'extrémité (110B), au moins une aile (116) qui forme un obstacle définissant avec au moins un retour (111) dudit premier volet (110) au moins un passage (117) d'accès à au moins un élément d'engagement mâle (114), ledit passage (117) présentant une hauteur (H) réduite contraignant à assembler lesdits volets (110,120) entre eux en approchant le second volet (120) incliné par rapport à l'axe de pivotement (X) du premier volet (110), puis en pivotant ledit second volet (120) pour le redresser selon l'axe de pivotement (X) afin d'engager successivement un desdits éléments d'engagement femelles (124A) sur l'élément d'engagement mâle (114) correspondant puis l'autre desdits éléments d'engagement femelles (125A) sur l'autre élément d'engagement mâle (115) correspondant.

2. Accessoire d'angle (100) selon la revendication 1, **caractérisé en ce que** ladite aile (116) est unique et s'étend sur la majorité de la hauteur du volet correspondant.

3. Accessoire d'angle (100) selon l'une des revendications 1 ou 2, **caractérisé en ce que** chaque aile (116) présente un profil courbe.

4. Accessoire d'angle (100) selon l'une quelconque des revendications 1 à 3, **caractérisé en ce que** chaque aile (116) est inclinée par rapport à l'axe de pivotement (X) défini par lesdits moyens d'engagement mâles (114,115).

5. Accessoire d'angle (100) selon l'une quelconque des revendications précédentes, **caractérisé en ce qu'**un desdits éléments d'engagement mâles (115) comporte une pente (115A) destinée à coopérer avec un chanfrein (125B) prévu sur l'élément d'engagement femelle (125) correspondant pour aider à assembler lesdits éléments d'engagement mâle et femelle.

6. Accessoire d'angle (100) selon l'une quelconque des revendications précédentes, **caractérisé en ce que** lesdits éléments d'engagement mâles sont des tétons (114,115) qui font saillie de la face interne (110A) dudit premier volet (110).

7. Accessoire d'angle (100) selon l'une quelconque des revendications précédentes, **caractérisé en ce que** lesdits éléments d'engagement femelles sont des ouvertures (124A, 125A) prévues dans des oreilles (124,125) en vis-à-vis qui saillent des extrémités des retours (121,122) correspondants dudit second volet (120).

8. Accessoire d'angle (100) selon l'une quelconque des revendications précédentes, **caractérisé en ce que** chaque aile (116) forme une seule pièce avec ledit premier volet (110) réalisé par moulage d'une matière plastique.

9. Accessoire d'angle (100) selon l'une quelconque des revendications précédentes, **caractérisé en ce que** lesdits éléments d'engagement mâles (114,115) viennent de formation avec ledit premier volet (110) réalisé par moulage d'une matière plastique.

10. Accessoire d'angle (100) selon l'une quelconque des revendications précédentes, **caractérisé en ce que** lesdits éléments d'engagement femelles (124,125) viennent de formation avec ledit second volet (120) réalisé par moulage d'une matière plastique.

## Claims

1. An angle accessory (100) serving to establish continuity between two skirting duct segments (10, 20) running along two walls that are at an angle to each other, said angle accessory comprising two distinct flaps (110, 120) provided with assembly means that co-operate to allow said flaps to pivot about a pivot axis (X), said assembly means comprising firstly, at one end of lips (111, 112) of the first flap (110), two male engagement elements (114, 115) extending along the pivot axis (X), and, secondly at one end of lips (121, 122) of the second flap (120), two female engagement elements (124, 124A, 125, 125A) designed to receive said male engagement elements (114, 115), said angle accessory being **characterized in that,** in the vicinity of said male engagement elements (114, 115), the first flap (110) is provided with at least one flange (116) projecting from one of its end edges (110B) and forming an obstacle that co-operates with at least one lip (111) of said first flap (110) to define at least one passageway (117) giving access to at least one male engagement element (114), said passageway (117) having a small height (H) constraining said flaps (110, 120) to be assembled together by bringing the second flap (120) towards the first flap while tilting said second flap relative to said pivot axis (X) of the first flap (110), and then by straightening up said second flap (120) along the pivot axis (X) so as to engage successively one of said female engagement elements (124A) over the corresponding male engagement element (114) and then the other of said female engagement elements (125A) over the corresponding other male engagement element (115).

2. An angle accessory (100) according to claim 1, **characterized in that** said flange (116) is a single flange and it extends over the majority of the height of the corresponding flap.

3. An angle accessory (100) according to claim 1 or claim 2, **characterized in that** each flange (116) has a curved profile.

4. An angle accessory (100) according to any one of claims 1 to 3, **characterized in that** each flange (116) is inclined relative to the pivot axis (X) defined by said male engagement means (114, 115).

5. An angle accessory (100) according to any preceding claim, **characterized in that** one of said male engagement elements (115) has a slope (115A) serving to co-operate with a bevel (125B) provided on the corresponding female engagement element (125) in order to assist in assembling together said male and female engagement elements.

6. An angle accessory (100) according to any preceding claim, **characterized in that** said male engagement elements are studs (114, 115) which project from the inside face (110A) of said first flap (110).

7. An angle accessory (100) according to any preceding claim, **characterized in that** said female engagement elements are openings (124A, 125A) provided in mutually facing lugs (124, 125) which project from the ends of the corresponding lips (121, 122) of said second flap (120).

8. An angle accessory (100) according to any preceding claim, **characterized in that** each flange (116) is formed integrally with said first flap (110) which is made of a molded plastics material.

9. An angle accessory (100) according to any preceding claim, **characterized in that** said male engagement elements (114, 115) are formed integrally with said first flap (110) which is made of a molded plastics material.

10. An angle accessory (100) according to any preceding claim, **characterized in that** said female engagement elements (124, 125) are formed integrally with said second flap (120) which is made of a molded plastics material.

## Patentansprüche

1. Winkelzubehörelement (100), das dazu bestimmt ist, eine Kontinuität zwischen zwei Führungskanalabschnitten (10, 20) herzustellen, die an zwei Wänden verlaufen und zwischen sich ein Zweiflach bilden, wobei das Winkelzubehörelement zwei einzelne Flügel (110, 120) umfasst, die Montagemittel darstellen, die zusammenwirken, um das Schwenken der Flügel um eine Schwenkachse (X) zu gestatten, und einerseits an einem Ende von Umbiegungen (111, 112) des ersten Flügels (110) zwei Eingriffselemente (114, 115), die sich entlang der Schwenkachse (X) erstrecken, und andererseits an einem Ende von Umbiegungen (121, 122) des zweiten Flügels (120) zwei Aufnahmeelemente (124, 124A, 125, 125A) umfassen, die dazu bestimmt sind, die Eingriffselemente (114, 115) aufzunehmen, **dadurch gekennzeichnet, dass** der erste Flügel (110) in der Nähe der Eingriffselemente (114, 115) und von einem seiner Endränder (110B) vorragend mindestens einen Schenkel (116) trägt, der ein Hindernis bildet, das mit mindestens einer Umbiegung (111) des ersten Flügels (110) mindestens einen Durchgang (117) definiert, für den Zugriff auf mindestens ein Eingriffselement (114), wobei der Durchgang (117) eine geringe Höhe (H) aufweist, wodurch man dazu gezwungen ist, die Flügel (110, 120) aneinander zu montieren, indem der zweite Flügel (120) bezüglich der Schwenkachse (X) des ersten Flügels (110) geneigt herangeführt wird und anschließend der zweite Flügel (120) geschwenkt wird, so dass er gemäß der Schwenkachse (X) ausgerichtet ist, um nacheinander eines der Eingriffselemente (124A) mit dem entsprechenden Eingriffselement (114) und dann das andere der Eingriffselemente (125A) mit dem entsprechenden anderen Eingriffselement (115) in Eingriff zu bringen.

2. Winkelzubehörelement (100) nach Anspruch 1, **dadurch gekennzeichnet, dass** der Schenkel (116) einteilig ist und sich über den größten Teil der Höhe des entsprechenden Flügels erstreckt.

3. Winkelzubehörelement (100) nach Anspruch 1 oder 2, **dadurch gekennzeichnet, dass** jeder Schenkel (116) ein gebogenes Profil hat.

4. Winkelzubehörelement (100) nach einem der Ansprüche 1 bis 3, **dadurch gekennzeichnet, dass** jeder Schenkel (116) bezüglich der durch die Eingriffsmittel (114, 115) definierten Schwenkachse (X) geneigt ist.

5. Winkelzubehörelement (100) nach einem der vorhergehenden Ansprüche, **dadurch gekennzeichnet, dass** eines der Eingriffselemente (115) eine Schräge (115A) umfasst, die dazu bestimmt ist, mit einer Fase (125B) zusammenzuwirken, die am entsprechenden Aufnahmeelement (125) vorgesehen ist, um die Montage der Eingriffs- und Aufnahmeelemente zu unterstützen.

6. Winkelzubehörelement (100) nach einem der vorhergehenden Ansprüche, **dadurch gekennzeichnet, dass** es sich bei den Eingriffselementen um Zapfen (114, 115) handelt, die von der Innenfläche (110A) des ersten Flügels (110) vorragen.

7. Winkelzubehörelement (100) nach einem der vorhergehenden Ansprüche, **dadurch gekennzeichnet, dass** es sich bei den Aufnahmeelementen um Öffnungen (124A, 125A) handelt, die in gegenüberliegenden Lappen (124, 125) vorgesehen sind, die von den Enden der entsprechenden Umbiegungen (121, 122) des zweiten Flügels (120) vorragen.

8. Winkelzubehörelement (100) nach einem der vorhergehenden Ansprüche, **dadurch gekennzeichnet, dass** jeder Schenkel (116) mit dem ersten Flügel (110) einstückig ist, der durch Formen eines Kunststoffs hergestellt wird.

9. Winkelzubehörelement (100) nach einem der vorhergehenden Ansprüche, **dadurch gekennzeichnet, dass** die Eingriffselemente (114, 115) zusammen mit dem ersten Flügel (110) hergestellt sind, der durch Formen eines Kunststoffs hergestellt wird.

10. Winkelzubehörelement (100) nach einem der vorhergehenden Ansprüche, **dadurch gekennzeichnet, dass** die Aufnahmeelemente (124, 125) zusammen mit dem zweiten Flügel (120) hergestellt sind, der durch Formen eines Kunststoffs hergestellt wird.
